# FASCICULE DE BREVET EUROPEEN

(11) **EP 3 409 906 B1**
(45) Date de publication et mention de la délivrance du brevet: **09.02.2022**
(21) Numéro de dépôt: 18170917.1
(22) Date de dépôt: 04.05.2018
(51) Int. Cl.: F01D 25/02, F04D 29/02, F04D 29/54, F02C 7/047

(54) **DÉGIVRAGE D'UN BORD D'ATTAQUE DE TURBOMACHINE PAR DES MOYENS PNEUMATIQUES**
ENTEISUNG EINER VORDERKANTE EINER TURBOMASCHINE DURCH PNEUMATISCHE MITTEL
DE-ICING OF A LEADING EDGE OF A TURBOMACHINE BY PNEUMATIC MEANS

(30) Priorité: 31.05.2017 BE 201705388
(43) Date de publication de la demande: 05.12.2018
(73) Titulaire: Safran Aero Boosters SA, 4041 Herstal (BE)
(72) Inventeur: RAIMARCKERS, Nicolas, 4263 Tourinne (Braives) (BE)
(74) Mandataire: Lecomte & Partners

(56) Documents cités:
- EP-A1- 0 098 182
- EP-A2- 0 855 340
- FR-A1- 2 962 489

## Description

### Domaine technique

L'invention concerne le dégivrage d'un compresseur de turbomachine à l'aide d'un fluide dégivrant pressurisé. L'invention a également trait à une turbomachine axiale, notamment un turboréacteur d'avion ou un turbopropulseur d'aéronef. L'invention comporte en outre un procédé de dégivrage de compresseur.

### Technique antérieure

Les systèmes dégivrants par injection d'air chaud équipent les entrées de compresseurs basse-pression depuis de nombreuses années. Ces systèmes incluent des canaux traversant le bec de séparation et des encoches orientant le gaz dégivrant vers les aubes grillageant l'entrée du compresseur.

Le document EP3130765 A1 divulgue un turboréacteur double flux équipé d'un compresseur basse-pression dont l'entrée est délimitée par un bec de séparation dégivrant. Ce dernier comporte une paroi annulaire externe ; une paroi annulaire interne avec un bord amont circulaire lié à la paroi externe. La paroi interne est une virole externe supportant les aubes d'entrée et est configurée pour guider le flux primaire après séparation par le bec de séparation. Le bord amont de la paroi interne comprend des encoches qui traversent radialement la paroi interne afin de permettre une circulation de fluide dégivrant au travers de la paroi interne. Ce fluide dégivrant est à la fois chaud et pressurisé, il est prélevé dans le compresseur haute-pression. Malgré un savant calibrage des encoches, l'efficacité reste perfectible.

Le document FR 2 962 489 A1 décrit un système de dégivrage de l'entrée d'air d'une turbomachine avec des bandes gonflables en matériau élastomère qui agissent sur le givre. Ce système est encombrant et n'est pas propice à l'enlèvement du givre sur le bec de séparation flux primaire / flux secondaire d'une turbomachine double-flux.

Le document EP 0 098 182 A1 divulgue un compresseur conforme au préambule de la revendication 1.

### Résumé de l'invention

### Problème technique

L'invention a pour objectif de résoudre au moins un des problèmes posés par l'art antérieur. Plus précisément, l'invention a pour objectif d'améliorer le pouvoir dégivrant du compresseur. L'invention a également pour objectif de proposer une solution simple, résistante, légère, économique, fiable, facile à produire, commode d'entretien, d'inspection aisée, et améliorant le rendement.

### Solution technique

L'invention a pour objet un compresseur de turbomachine axiale selon la revendication 1, une turbomachine selon la revendication 9 et un procédé selon la revendication 12.

Selon des modes avantageux de l'invention, le compresseur peut comprendre une ou plusieurs des caractéristiques suivantes, prises isolément ou selon toutes les combinaisons techniques possibles :
- La membrane comprend un orifice d'échappement pour le fluide pressurisé, ledit échappement étant configuré pour être bouché par le dépôt de givre.
- La structure dégivrante comprend un bec de séparation avec un bord de séparation circulaire formé par la ligne de séparation.
- La structure dégivrante comprend une aube statorique avec un bord d'attaque formé par la ligne de séparation.
- L'aube comprend une surface intrados et une surface extrados s'étendant depuis le bord d'attaque, la membrane déformable formant au moins partiellement la surface intrados et/ou la surface extrados.
- La structure dégivrante comprend au moins deux rangées annulaires d'aubes statoriques, dont une rangée amont et une rangée aval, la au moins une membrane étant disposée sur l'une des aubes de la rangée aval.
- La membrane comprend un matériau néoprène perméable au fluide pressurisé.
- La membrane comprend un matériau métallique, notamment une feuille métallique.
- Le corps comprend une zone de moindre épaisseur recevant la membrane déformable.
- Le corps comprend un épaulement le long duquel la membrane déformable est montée de manière étanche.
- La membrane déformable est apte à se déplacer entre une première position occupée en l'absence de givre, et une deuxième position occupée en présence de givre ; la pression du fluide pressurisé étant apte à déplacer la membrane de la première position vers la deuxième position en s'opposant à une pression dynamique d'un fluide dans le turboréacteur et/ou en surmontant la résistance mécanique du dépôt de givre.
- La ligne de séparation traverse l'orifice.
- Le canal comporte une extrémité à l'opposé de l'orifice et une extrémité du côté de l'orifice qui est à distance dudit orifice.

L'invention a également pour objet une turbomachine, notamment un turboréacteur d'aéronef, comprenant un compresseur, remarquable en ce que le compresseur est conforme à l'invention.

Selon un mode avantageux de l'invention, la turbomachine comprend un dispositif de pressurisation du fluide pressurisé à une pression supérieure à la pression de sortie du compresseur.

Selon un mode avantageux de l'invention, la turbomachine comprend un module de chauffage du fluide pressurisé à une température supérieure à la température de sortie du compresseur.

Selon un mode avantageux de l'invention, la turbomachine comprend en outre un compresseur haute-pression, le fluide pressurisé provenant dudit compresseur haute-pression, éventuellement de la partie aval dudit compresseur haute-pression.

L'invention a également pour objet un procédé de dégivrage de compresseur de turbomachine, notamment de compresseur basse-pression, le procédé comprenant les étapes : (b) givrage d'une surface en contact d'un flux du compresseur ; (d) détachement de givre de ladite surface par un gaz pressurisé ; remarquable en ce que ladite surface est formée par une membrane perméable au gaz pressurisé et mobile entre une première configuration et une deuxième configuration, lors de l'étape (b) givrage, la perméabilité de la membrane diminue si bien que la pression du fluide pressurisé pousse la membrane dans la deuxième configuration permettant d'effectuer l'étape (d) détachement du givre, la surface forme éventuellement une structure dégivrante, et le compresseur est conforme à l'invention.

Selon un mode avantageux de l'invention, le fluide pressurisé est fourni au compresseur de manière discontinue.

Selon un mode avantageux de l'invention, le procédé est un procédé itératif.

### Avantages apportés

L'invention permet un dégivrage combiné du compresseur. En effet, la pression du gaz est employée en même temps que sa température, si bien que l'efficacité est amplifiée. Un effet mécanique s'ajoute à l'évaporation de la glace ou givre parasite. Deux propriétés du fluide sont employées. Il est envisageable d'en employer une troisième lorsque la nature chimique du fluide permet un dégivrage.

Par ailleurs, l'invention permet une alimentation par intermittences en fluide dégivrant. Ce mode d'alimentation permet d'effectuer une détection de présence de givre à l'aide d'une circulation test. La pression pourra être augmentée significativement lorsqu'une présence de givre est décelée en raison d'un colmatage de la membrane.

### Brève description des dessins

La figure 1 représente une turbomachine axiale selon l'invention.
La figure 2 est un schéma d'un compresseur de turbomachine selon l'invention.
La figure 3 illustre une portion de structure dégivrante dans une position au repos.
La figure 4 illustre la portion de structure dégivrante dans une position de dégivrage.
La figure 5 est un diagramme du procédé de dégivrage du compresseur selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

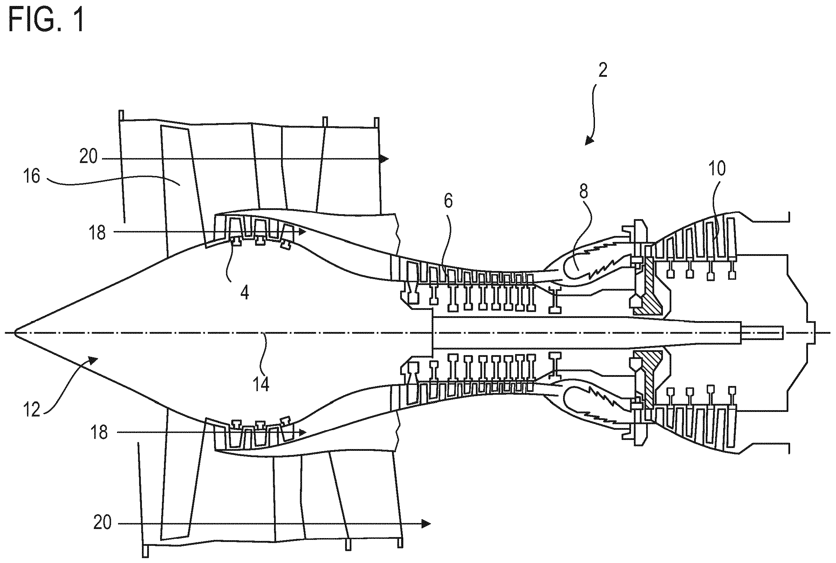

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine. La soufflante peut être du type non carénée, par exemple à double rotor contrarotatifs, éventuellement en aval.

Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre. Ils sont canalisés par le carter de la turbomachine et/ou des viroles. A cet effet, le carter présente des parois cylindriques qui peuvent être internes et externes.

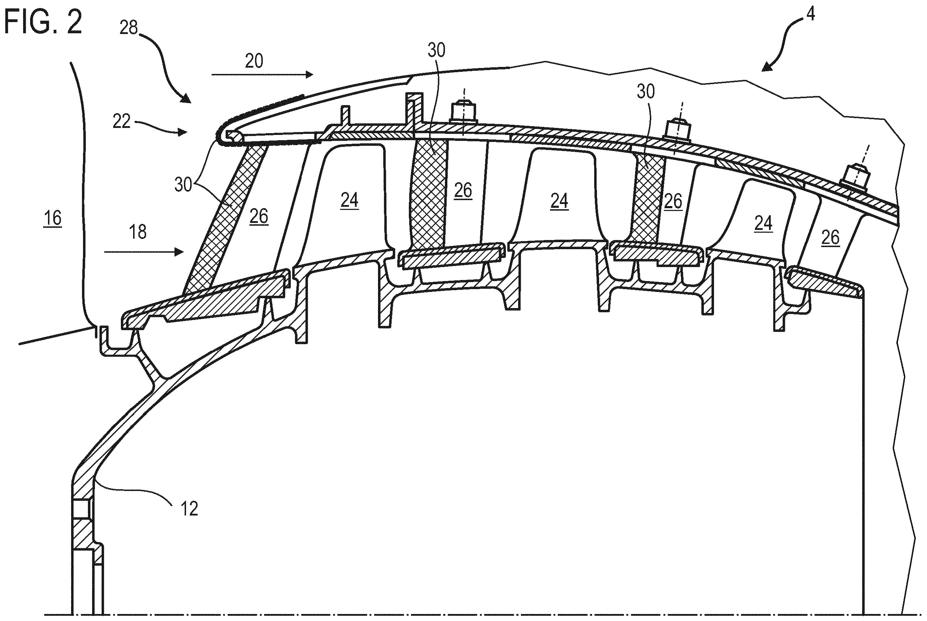

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois. Il peut être un tambour monobloc aubagé, ou comprendre des aubes à fixation par queue d'aronde.

Le compresseur basse-pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression, notamment en pression statique.

Les aubes statoriques 26 s'étendent essentiellement radialement depuis un carter extérieur, et peuvent y être fixées et immobilisées à l'aide d'axes. Certaines aubes peuvent être à calage variable. Le carter peut être formé de plusieurs anneaux, ou de demi-coquilles.

Afin de s'opposer à la formation comme à la présence de givre, le compresseur présente une structure dégivrante 28. Cette structure dégivrante 28 comporte au moins une membrane déformable 30, éventuellement plusieurs membranes déformables 30. La ou les membranes 30 peuvent être disposées sur le bec de séparation, et/ou sur les aubes statoriques 26 du compresseur 4. Les aubes concernées peuvent être celles en amont du compresseur 4, c'est-à-dire celles en regard de la soufflante 16. Les aubes 26 des rangées aval peuvent également être équipées de membranes 30. Certaines membranes 30 peuvent être appliquées sur les viroles et les carters de la turbomachine. Les membranes 30 peuvent être disposées en moitié amont des aubes 26.

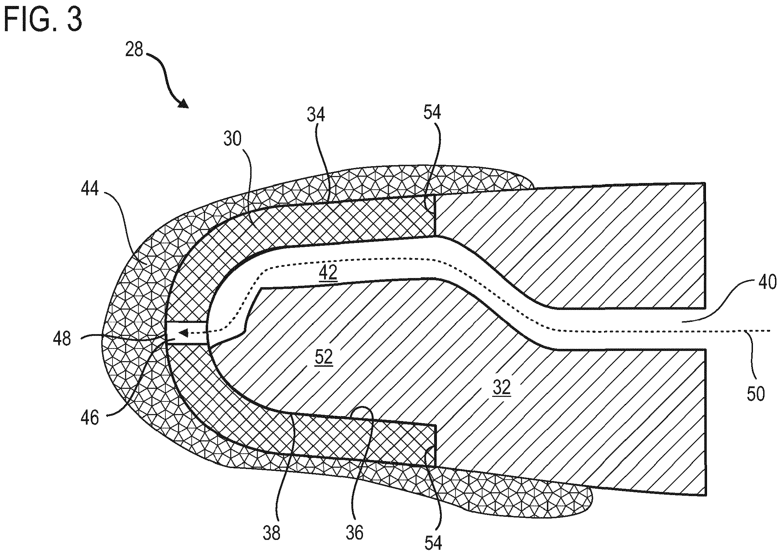

La figure 3 esquisse une partie de la structure dégivrante 28 telle que celle de la figure 2. La membrane déformable 30 est ici dans une première position, par exemple une position rétractée et/ou au repos.

La structure 28 comporte un corps 32, éventuellement un corps 32 essentiellement plein. La membrane déformable 30 recouvre partiellement le corps 32. La surface extérieure 34 de la membrane 30 peut former celle de la structure 28. Dans la présente position, la surface intérieure 36 de la membrane 30 est plaquée contre la surface extérieure 38 du corps 32 qui est placée en regard, éventuellement sur sensiblement toute la surface intérieure 36 de la membrane 30. La surface intérieure 36 épouse la surface extérieure 38 du corps à leur interface ; éventuellement sur la majorité de leur interface, ou toute leur interface.

Le corps 32 peut comporter au moins un passage 40, éventuellement plusieurs passages 40 répartis le long et/ou sur la surface de la membrane 30. Le ou, au moins un, ou chaque passage 40 peut comprendre un canal 42, notamment formé sur la surface extérieure 38 du corps 32. Chaque canal 42 s'étend à l'interface corps/membrane. Il peut être recouvert par la membrane 30. Chaque passage 40, et le cas échéant chaque canal 42, conduit le fluide dégivrant pressurisé 50 employé contre le dépôt et/ou l'apparition de givre 44.

Ainsi, le fluide pressurisé 50 est acheminé depuis sa source jusqu'à la surface extérieure 34 de la membrane 30, et donc jusqu'à la surface extérieure de la structure dégivrante 28. En tapissant les zones sensibles de la structure à l'aide de membranes 30, et en assurant une circulation de fluide dégivrant 50, il devient possible de réduire ou de supprimer le givre apparaissant ou tendant à s'accumuler en une couche de givre 44 d'épaisseur variable.

La membrane 30 peut comprendre au moins un orifice 46. Plusieurs orifices 46 peuvent être répartis sur la surface intérieure 36 et/ou sur la extérieure 34 de la membrane 30. Au moins un ou plusieurs ou chaque orifice 46 peut communiquer avec le ou l'un des passages 40, et éventuellement via le ou l'un des canaux 42.

Grâce à chaque orifice 46, le fluide pressurisé 50 peut traverser la membrane 30, et sortir du corps 32. Au moins un, ou l'orifice 46 peut être placé sur une ligne de séparation 48 qui coupe un flux rencontré par la structure dégivrante 28 en au moins deux flux. Un flux amont se partage en deux flux en aval.

La membrane peut généralement être considérée comme poreuse. Sa porosité peut résulter de la présence des orifices 46, et/ou de sa structure intrinsèque. Elle peut être microperforée. Elle peut comprendre des conduits de largeur d'au plus: 500 µm, ou 100 µm, ou 10 µm. La membrane 30 peut être métallique, et/ou comprendre du néoprène. Le matériau néoprène peut être perméable au gaz, et notamment au fluide dégivrant ; mais imperméable à l'eau. Elle peut être une feuille d'épaisseur généralement constante. L'épaisseur peut être inférieure ou égale à 0,10 mm.

Le corps 32 peut correspondre à un corps d'une aube statorique telle que l'une de celles représentées en figure 2. Dans ce cas, la ligne de séparation 48 peut correspondre au bord d'attaque de l'aube. La surface extérieure 34 de la structure peut alors former la surface intrados et/ou la surface extrados de l'aube. Cela signifie que la membrane 30 peut être du côté aspiration, ou du côté refoulement de l'aube, ou être sur ces deux côtés.

Le corps 32 peut également correspondre au corps du bec de séparation en entrée du compresseur tel que celui évoqué en relation avec la figure 2. Ici, la ligne de séparation 48 peut former le bord de séparation circulaire en amont du bec de séparation. La surface extérieure 34 de la structure peut alors trancher et délimiter le flux primaire et/ou le flux secondaire de la turbomachine.

En cas de formation significative de givre 44 sur la surface extérieure 34, la circulation du fluide pressurisé 50 est entravée. En détail, les orifices 46 peuvent se boucher, et/ou l'écoulement au travers de la matière microperforée peut se réduire et même s'arrêter. La porosité générale de la membrane 30 diminue.

Le corps 32 peut comprendre une zone de moindre épaisseur 52. Cette zone 52 permet d'y intégrer l'épaisseur de la membrane 30. La zone 52 peut être délimitée par au moins une ou deux épaulements 54. Chaque épaulement 54 délimite la zone 52, et/ou souligne la différence d'épaisseur. La membrane 30 peut être liée de manière étanche aux épaulements 54 afin d'y contenir le fluide pressurisé.

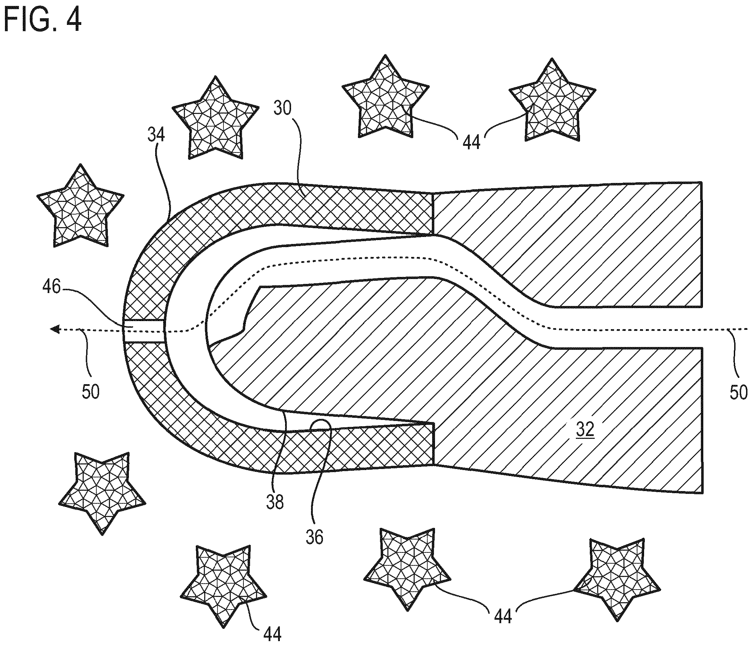

La figure 4 représente la structure dégivrante 28 de la figure 3 dans une deuxième position, également appelée position déployée, ou encore position de dégivrage.

En raison de la réduction de perméabilité de la membrane 30, et de l'éventuel blocage du fluide 50, la pression de ce dernier exerce une force mécanique de dégivrage. Cette force, ou résultante mécanique, tend à pousser la membrane 30 depuis l'intérieur. La membrane 30 est entrainée de la première position ; également appelée première configuration, à la deuxième position ; également appelée deuxième configuration. La pression du fluide, et donc la force de dégivrage, déforme la membrane 30 en s'opposant à la pression dynamique du fluide entrant dans la turbomachine. En plus, la résistance mécanique de la couche de givre 44 est surmontée. Le givre 44 se fissure et se détache de la surface extérieure 34. En raison de l'éventuel agrandissement de la membrane, la force de cisaillement à l'interface décolle le givre 44 de la surface extérieure 34.

Au cours de ce phénomène, la surface intérieure 36 de la membrane 30 s'éloigne de la surface extérieure 38 du corps 32. D'une certaine manière, la membrane se gonfle. L'espace qu'elle délimite en combinaison avec le corps 32 se remplit du fluide pressurisé 50. Ce remplissage s'effectue jusqu'à ce que l'orifice 46 se débouche, et/ou que la surface extérieure 34 se décolmate totalement ou suffisamment pour permettre une circulation au travers de la membrane 30. Lorsque la membrane 30 se vide, elle revient se plaquer contre la surface extérieure 38 du corps.

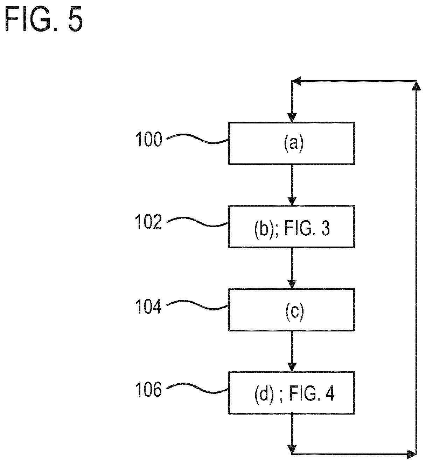

La figure 5 est un diagramme du procédé de dégivrage de compresseur. Le compresseur correspond à celui représenté en relation avec les figures 1 à 4.

Le procédé peut comprendre les étapes suivantes, éventuellement effectuées dans l'ordre qui suit :
(a) repos 100 de la membrane dans une première position vers le corps;
(b) givrage 102 d'une surface de la structure dégivrante, tel que représenté en figure 3 ;
(c) déplacement 104 de la membrane dans ou vers la deuxième position en s'éloignant au moins localement du corps ;
(d) détachement 106 du givre de la surface de la structure dégivrante, tel que représenté en figure 4.

Les étapes (a) repos 100 et (b) givrage 102 peuvent s'effectuer l'une après l'autre, ou simultanément. De même, les étapes (c) déplacement 104 et (d) détachement 106 peuvent s'effectuer l'une après l'autre, ou simultanément. Suite à l'étape (d) détachement 106, le procédé peut revenir à l'étape (a) repos 100. La membrane peut regagner sa position rétractée. Elle peut à nouveau se rapprocher du corps et l'épouser.

L'alimentation en fluide pressurisé peut être discontinue. Elle peut être effectuée ponctuellement de manière répétée. L'alimentation peut comprendre des alimentations test ou de détection, par exemple avec une pression moindre. En effet, lorsque du fluide est injecté mais ne s'écoule pas, une situation de présence de givre peut être détectée. En effet, l'accumulation de givre a pour conséquence de bloquer le libre écoulement du fluide. En réponse, un autre écoulement de plus grande pression peut être injecté. Celui-là a pour fonction de rompre le givre et de libérer la surface atteinte.

## Revendications

1. Compresseur (4; 6) de turbomachine (2) axiale, notamment de compresseur basse-pression (4) de turboréacteur d'aéronef, le compresseur (4 ; 6) comprenant une structure dégivrante (28) apte à être dégivrée par une circulation de fluide pressurisé (50),
la structure dégivrante (28) comprenant au moins une membrane déformable (30) apte à être traversée par la circulation de fluide pressurisé (50),
la structure dégivrante (28) étant configurée de manière à ce qu'un dépôt de givre (44) sur la membrane déformable (30) bloque ou réduit la circulation de fluide pressurisé (50);
compresseur dans lequel en cas de blocage ou de réduction de ladite circulation, la pression du fluide pressurisé (50) déforme la membrane déformable (30) de manière à fracturer ledit dépôt de givre (44), la structure dégivrante (28) comprenant au moins un corps (32) avec une surface extérieure (38) recouverte par la membrane déformable (30),
la surface extérieure (38) comprenant au moins un canal (42) s'étendant en regard de la membrane déformable (30) et destiné à être traversé par le fluide pressurisé (50),
en présence de givre (44) la membrane déformable (30) étant configurée pour s'écarter de la surface extérieure (38) grâce au fluide pressurisé (50),
le compresseur étant **caractérisé en ce qu'**en l'absence de givre (44) la membrane déformable est configurée pour être plaquée contre la surface extérieure (38), et **en ce que** la membrane déformable (30) comprend au moins une ligne de séparation (48) d'un flux et est apte à être traversée par le fluide pressurisé (50) au niveau de la ligne de séparation.

2. Compresseur (4; 6) selon la revendication 1, **caractérisé en ce que** la membrane déformable (30) comprend un orifice (46) d'échappement du fluide pressurisé (50), ledit orifice (46) étant configuré pour être bouché par le dépôt de givre (44).

3. Compresseur (4 ; 6) selon la revendication 1 ou 2, **caractérisé en ce que** la structure dégivrante (28) comprend un bec de séparation (22) avec un bord de séparation circulaire formé par la ligne de séparation (48).

4. Compresseur (4 ; 6) selon l'une des revendications 1 à 3, **caractérisé en ce que** la structure dégivrante (28) comprend une aube (26) avec un bord d'attaque formé par la ligne de séparation (48).

5. Compresseur (4 ; 6) selon la revendication 4, **caractérisé en ce que** l'aube (26) comprend une surface intrados et une surface extrados s'étendant depuis le bord d'attaque, la membrane déformable (30) formant au moins partiellement la surface intrados et/ou la surface extrados.

6. Compresseur (4 ; 6) selon l'une des revendications 1 à 5, **caractérisé en ce que** la membrane déformable (30) comprend un matériau métallique, notamment une feuille métallique.

7. Compresseur (4 ; 6) selon l'une des revendications 1 à 6, **caractérisé en ce que** le corps (32) comprend une zone de moindre épaisseur (52) recevant la membrane déformable (30).

8. Compresseur (4 ; 6) selon l'une des revendications 1 à 7, **caractérisé en ce que** la membrane déformable (30) est apte à se déplacer entre une première position occupée en l'absence de givre (44), et une deuxième position occupée en présence de givre (44); la pression du fluide pressurisé (50) étant apte à déplacer la membrane déformable (30) de la première position vers la deuxième position en s'opposant à une pression dynamique d'un fluide dans le turboréacteur et/ou en surmontant la résistance mécanique du dépôt de givre (44).

9. Turbomachine (2), notamment un turboréacteur d'aéronef, comprenant un compresseur (4 ; 6), **caractérisée en ce que** le compresseur est conforme à l'une des revendications 1 à 8.

10. Turbomachine (2) selon la revendication 9, **caractérisée en ce qu'**elle comprend un module de chauffage du fluide pressurisé (50) à une température supérieure à la température de sortie du compresseur (4 ; 6).

11. Turbomachine (2) selon l'une des revendications 9 à 10, **caractérisée en ce qu'**elle comprend en outre un compresseur haute-pression (6), le fluide pressurisé (50) provenant dudit compresseur haute-pression, éventuellement de la partie aval dudit compresseur haute-pression (6).

12. Procédé de dégivrage de compresseur (4; 6) de turbomachine (2), notamment de compresseur basse-pression, le procédé comprenant les étapes :
(b) givrage (102) d'une surface (34) en contact d'un flux du compresseur (4 ; 6);
(d) détachement (106) de givre (44) de ladite surface par un gaz pressurisé ;
ladite surface étant formée par une membrane perméable au gaz pressurisé et mobile entre une première configuration et une deuxième configuration, lors de l'étape (b) de givrage (102), la perméabilité de la membrane diminuant si bien que la pression du fluide pressurisé (50) pousse la membrane dans la deuxième configuration permettant d'effectuer l'étape (d) de détachement du givre (44), la surface formant une structure dégivrante (28),
le procédé étant **caractérisé en ce que** le compresseur (4 ; 6) est conforme à l'une des revendications 1 à 8.

13. Procédé selon la revendication 12, **caractérisé en ce que** le fluide pressurisé (50) est fourni au compresseur (4 ; 6) de manière discontinue.

## Patentansprüche

1. Verdichter (4; 6) einer axialen Strahlturbine (2), insbesondere ein Niederdruckverdichter (4) einer Luftfahrzeugstrahlturbine, wobei der Verdichter (4; 6) eine Enteisungsstruktur (28) umfasst, die durch eine Zirkulation von unter Druck stehendem Fluid (50) entfrostet werden kann, wobei die Enteisungsstruktur (28) mindestens eine verformbare Membran (30) umfasst, die von der Zirkulation des unter Druck stehenden Fluids (50) durchströmt werden kann, wobei die Enteisungsstruktur (28) so konfiguriert ist, dass eine Ablagerung von Eis (44) auf der verformbaren Membran (30) den Fluss des unter Druck stehenden Fluids (50) blockiert oder reduziert, wobei die Enteisungsstruktur (28) mindestens einen Körper (32) mit einer Außenfläche (38) umfasst, die von der verformbaren Membran (30) bedeckt wird, die Außenfläche (38) mindestens einen Kanal (42) aufweist, der sich gegenüber der verformbaren Membran (30) erstreckt und dazu bestimmt ist, von dem unter Druck stehenden Fluid (50) durchströmt zu werden, wobei die verformbare Membran (30) bei einer Ablagerung von Eis (44) so konfiguriert ist, dass sie sich mittels des unter Druck stehenden Fluids (50) von der Außenfläche (38) wegbewegt, wobei der Verdichter **dadurch gekennzeichnet ist, dass** bei fehlendem Eis (44) die verformbare Membran konfiguriert ist, gegen die Außenfläche (38) gedrückt zu werden, und dadurch, dass die verformbare Membran (30) mindestens eine Trennlinie (48) einer Strömung umfasst und geeignet ist, von der unter Druck stehenden Fluid (59) auf dem Niveau der Trennlinie durchströmt zu werden.

2. Verdichter (4; 6) nach Anspruch 1, **dadurch gekennzeichnet, dass** die verformbare Membran (30) eine Auslassöffnung (46) für ein unter Druck stehendes Fluid umfasst, wobei die Öffnung (46) konfiguriert ist, durch die Ablagerung von Eis (44) blockiert zu werden.

3. Verdichter (4; 6) nach Anspruch 1 oder 2, **dadurch gekennzeichnet, dass** die Enteisungsstruktur (28) eine Trennlippe (22) mit einer kreisförmigen Trennkante umfasst, die durch die Trennlinie gebildet wird.

4. Verdichter (4; 6) nach Anspruch 1 bis 3, **dadurch gekennzeichnet, dass** die Enteisungsstruktur (28) eine Schaufel (26) mit einer durch die Trennlinie (48) gebildeten Vorderkante umfasst.

5. Verdichter (4; 6) nach Anspruch 4, **dadurch gekennzeichnet, dass** die Schaufel (26) eine Abtrieb- und eine Auftriebsfläche umfasst, die sich von der Vorderkante aus erstrecken, wobei die verformbare Membran (30) mindestens teilweise eine Abtriebsfläche und / oder eine Auftriebsfläche bildet.

6. Verdichter (4; 6) nach einem der Ansprüche 1 bis 5, **dadurch gekennzeichnet, dass** die verformbare Membran (30) einen metallischen Werkstoff umfasst, insbesondere eine Metallfolie.

7. Verdichter (4; 6) nach einem der Ansprüche 1 bis 6, **dadurch gekennzeichnet, dass** der Körper (32) einen dünneren Bereich (52) umfasst, der die verformbare Membran (30) aufnimmt.

8. Verdichter (4; 6) nach einem der Ansprüche 1 bis 7, **dadurch gekennzeichnet, dass** die verformbare Membran (30) geeignet ist, sich zwischen einer ersten Position, die bei Abwesenheit von Eis (44) eingenommen wird und einer zweiten Position, die bei Anwesenheit von Eis (44) eingenommen wird, zu verschieben, wobei das unter Druck stehende Fluid (50) die verformbare Membran (30) von der ersten Position zur zweiten Position verschieben kann, indem einem dynamischen Druck eines Fluids in der Strahlturbine entgegengewirkt wird und /oder der mechanische Druck der Eisablagerung (44) überwunden wird.

9. Strahlturbine (2) insbesondere eine Luftschiffstrahlturbine, umfassend einen Verdichter (4; 6), **dadurch gekennzeichnet, dass** der Verdichter einem der Ansprüche 1 bis 8 entspricht.

10. Strahlturbine (2) nach Anspruch 9, **dadurch gekennzeichnet, dass** sie ein Modul zum Erwärmen des unter Druck stehenden Fluids (50) auf eine Temperatur höher als die der Austrittstemperatur des Verdichters (4; 6) umfasst.

11. Strahlturbine (2) nach einem der Ansprüche 9 bis 10, **dadurch gekennzeichnet, dass** sie ferner einen Hochdruckverdichter (6) umfasst, wobei das unter Druck stehende Fluid (50) von dem Hochdruckverdichter stammt, möglicherweise aus dem stromabwärtigen Teil des Hochdruckverdichters (6).

12. Enteisungsverfahren eines Verdichters (4; 6) einer Strahlturbine (2) insbesondere eines Niederdruckverdichters, wobei das Verfahren die folgenden Schritte umfasst:
(b) Vereisen (102) einer Oberfläche (34) in Kontakt mit einer Strömung des Verdichters (4; 6);
(d) Ablösen (106) von Eis (44) von der genannten Oberfläche mittels Druckgas;
Wobei die Oberfläche die durch eine druckgasdurchlässige Membran gebildet wird und bewegbar zwischen einer ersten Konfiguration und einer zweiten Konfiguration ist, während bei Schritt (b) der Vereisung (102) die Durchlässigkeit der Membran sinkt, so dass der Druck des unter Druck stehenden Fluids (50) die Membran in die zweite Konfiguration drückt, was die Durchführung von Schritt (d) Ablösen des Eises (44) ermöglicht, wobei die Oberfläche eine Enteisungsstruktur (28) bildet, wobei das Verfahren **dadurch gekennzeichnet ist, dass** der Verdichter (4; 6) einem der Ansprüche 1 bis 8 entspricht.

13. Verfahren nach Anspruch 12, **dadurch gekennzeichnet, dass** das unter Druck stehende Fluid (50) dem Verdichter (4; 6) diskontinuierlich zugeführt wird.

## Claims

1. Axial turbo engine compressor (4; 6), especially of low pressure compressor (4) for aircraft turbojet engine, the compressor (4; 6) comprising a de-icing structure (28) capable of being de-iced by a pressurized fluid (50) circulation, the de-icing structure (28) comprising at least one deformable membrane (30) capable of being passed through by the pressurized fluid (50) circulation, the de-icing structure (28) being configured in such a manner that a build-up of ice (44) on the deformable membrane (30) blocks or reduces the pressurized fluid (50) circulation;
the compressor wherein in the event of a blockage or reduction in said circulation, the pressure of the pressurized fluid (50) deforms the deformable membrane (30) in such a manner as to fracture said build-up of ice (44),
the de-icing structure (28) comprising at least one body (32) with an external surface (38) covered by the deformable membrane (30),
the external surface (38) comprising at least one channel (42) extending with respect to the deformable membrane (30) and intended to be passed through by the pressurized fluid (50), in the presence of ice (44) the deformable membrane (30) being configured to be moved away from the external surface thanks to the pressurized fluid (50),
the compressor being **characterized in that** in the absence of ice (44) the deformable membrane is configured to be pressed against the external surface (38),
and **in that** the deformable membrane (30) comprises at least one flow separation line (48), and is capable of being passed through by the pressurized fluid (50) at the separation line.

2. Compressor (4; 6) according to claim 1, **characterized in that** the deformable membrane (30) comprises an escape orifice (46) for the pressurized fluid (50), said orifice (46) being configured to be plugged by the build-up of ice (44).

3. Compressor (4; 6) according to claim 1 or 2, **characterized in that** the de-icing structure (28) comprises a splitter (22) with a circular separation edge formed by the separation line (48).

4. Compressor (4; 6) according to any one of claims 1 to 3, **characterized in that** the de-icing structure (48) comprises a vane (26) with a leading edge formed by the separation line (48).

5. Compressor (4; 6) according to claim 4, **characterized in that** the vane (26) comprises a lower surface and an upper surface extending from the leading edge, the deformable membrane (30) forming, at least in part, the upper surface and/or the lower surface.

6. Compressor (4; 6) according to any one of claims 1 to 5, **characterized in that** the deformable membrane (30) comprises a metallic material, especially a metal sheet.

7. Compressor (4; 6) according to any one of claims 1 to 6, **characterized in that** the body (32) comprises a zone of reduced thickness (52) receiving the deformable membrane (30).

8. Compressor (4; 6) according to any one of claims 1 to 7, **characterized in that** the deformable membrane (30) is capable of moving between a first position occupied in the absence of ice (44) and a second position occupied in the presence of ice (44); the pressurized fluid (50) pressure being capable of moving the deformable membrane (30) from the first position towards the second position, acting against a dynamic pressure of a fluid in the turbojet engine and/or overcoming the mechanical resistance of the build-up of ice (44).

9. Turbo engine (2), especially an aircraft turbojet engine, comprising a compressor (4; 6), **characterized in that** the compressor is in accordance to one of claims 1 to 8.

10. Turbo engine (2) according to claim 9, **characterized in that** it comprises a heating module of the pressurized fluid (50) at a temperature higher than the compressor (4; 6) outlet temperature.

11. Turbo engine (2) according to one of claims 9 and 10, **characterized in that** it further comprises a high pressure compressor (6), the pressurized fluid (50) originating from said high pressure compressor (6), optionally from the downstream part of said high pressure compressor (6).

12. De-icing process of a turbo engine (2) compressor (4; 6), especially of low pressure compressor, the process comprising the following steps consisting of:
(b) icing (102) of a surface (34) in contact with a flow from the compressor (4; 6);
(d) detachment (106) of ice (44) from said surface by a pressurized gas; said surface being formed by a membrane which is permeable to the pressurized gas and movable between a first configuration and a second configuration, during the icing (102) step (b), the permeability of the membrane drops with the result that the pressure of the pressurized fluid (50) pushes the membrane into the second configuration, allowing the ice (44) detachment stage (d) to be carried out,
the surface forming a de-icing structure (28), the process being **characterized in that** the compressor (4; 6) is in accordance with one of claims 1 to 8.

13. Process according to claim 12, **characterized in that** the pressurized fluid (50) is supplied to the compressor (4; 6) in a discontinuous manner.
